# EUROPÄISCHE PATENTSCHRIFT

(11) **EP 3 402 694 B1**
(45) Veröffentlichungstag und Bekanntmachung des Hinweises auf die Patenterteilung: **24.03.2021**
(21) Anmeldenummer: 16812723.1
(22) Anmeldetag: 13.12.2016
(51) Int. Cl.: B60Q 1/12, F21Y 103/10, F21S 41/663

(54) **SCHEINWERFERSYSTEM UND VERFAHREN ZUM BEREITSTELLEN EINER KURVENLICHTFUNKTION**
HEADLIGHT SYSTEM AND METHOD FOR MAKING AVAILABLE A CORNERING LIGHT FUNCTION
SYSTÈME DE PHARE ET PROCÉDÉ DE FOURNITURE D'UNE FONCTION D'ÉCLAIRAGE DE VIRAGE

(30) Priorität: 14.01.2016 DE 102016200339
(43) Veröffentlichungstag der Anmeldung: 21.11.2018
(73) Patentinhaber: Volkswagen Aktiengesellschaft, 38440 Wolfsburg (DE)
(72) Erfinder: GUTJAHR, Karl-Wilhelm, 10781 Berlin (DE); THIEL, Alexander, 38118 Braunschweig (DE)
(86) Internationale Anmeldenummer: PCT/EP2016/080733
(87) Internationale Veröffentlichungsnummer: WO 2017/121560

(56) Entgegenhaltungen:
- EP-A1- 2 501 206
- EP-A2- 2 085 688
- EP-A2- 2 548 768
- EP-A2- 2 818 793
- DE-A1-102005 041 234
- DE-A1-102007 052 745
- DE-A1-102012 103 313
- DE-A1-102015 224 161
- JP-A- 2010 095 205
- US-A1- 2015 204 502
- US-A1- 2016 069 527

## Beschreibung

Die vorliegende Erfindung betrifft ein Scheinwerfersystem für ein Fahrzeug zum Bereitstellen einer Kurvenlichtfunktion. Das Scheinwerfersystem umfasst ein erstes Lichtmodul, das eine erste Lichtquelle und eine Optikeinheit aufweist. Das erste Lichtmodul ist ausgebildet, ein asymmetrisches Abblendlicht zu erzeugen, wobei das asymmetrische Abblendlicht auf der Fahrerseite einer Mittelachse eine obere erste Hell-Dunkel-Grenze besitzt, die horizontal ausgerichtet ist. Das Scheinwerfersystem umfasst ferner ein zweites Lichtmodul, das mehrere matrixartig angeordnete Leuchtdiodeneinheiten umfasst. Des Weiteren umfasst das Scheinwerfersystem eine Steuereinheit, die mit zumindest dem zweiten Lichtmodul gekoppelt ist und die ausgebildet ist, die Lichtemission der einzelnen Leuchtdiodeneinheiten des zweiten Lichtmoduls separat anzusteuern. Schließlich umfasst das Scheinwerfersystem eine Kurvenerfassungseinheit, die mit der Steuereinheit gekoppelt ist und mit welcher der Radius einer Kurve in Fahrtrichtung des Fahrzeugs erfassbar ist. Des Weiteren betrifft die Erfindung ein Verfahren zum Bereitstellen einer Kurvenlichtfunktion.

Das Scheinwerfersystem eines Fahrzeugs hat die Aufgabe, bei schlechten Sichtverhältnissen, insbesondere bei Dunkelheit, die Umgebung in Fahrtrichtung vor dem Fahrzeug, insbesondere die Fahrbahn, auszuleuchten. Zusätzlich dient die Lichtemission des Scheinwerfersystems als Erkennungsmerkmal für andere Verkehrsteilnehmer.

Scheinwerfersysteme zum Bereitstellen verschiedener Lichtfunktionen sind als solche bekannt. Herkömmlicherweise kann das Scheinwerfersystem eine Abstrahlcharakteristik für eine Abblendlichtfunktion und eine Fernlichtfunktion erzeugen. Diese Lichtfunktionen können vom Fahrer manuell angesteuert werden. Es ist jedoch auch bekannt, dass diese Lichtfunktionen automatisch angesteuert werden. Es können zum Beispiel andere Verkehrsteilnehmer in der Umgebung des Fahrzeugs erfasst werden und in Abhängigkeit vom Erfassen solcher Verkehrsteilnehmer kann zwischen der Abblendlichtfunktion und der Fernlichtfunktion automatisch hin und her geschaltet werder

Die Druckschrift JP 2010 095205 A offenbart einen Scheinwerfer zur Erzeugung einer adaptiven Fernlicht-Lichtverteilung, wobei andere Verkehrsteilnehmer abgeblendet werden und wobei die Beleuchtung der Kurven verbessert wird.

Des Weiteren sind Scheinwerfersysteme bekannt, welche eine Kurvenlichtfunktion bereitstellen. Für eine Kurvenlichtfunktion wird die Abstrahlcharakteristik so verändert, dass sie zumindest horizontal in Richtung der in Fahrtrichtung liegenden Kurve geschwenkt wird, um die Fahrbahn in der Kurve, die vor dem Fahrzeug liegt, besser auszuleuchten.

Aus der DE 10 2006 039 182 A1 ist beispielsweise ein adaptives Kurvenlicht bekannt. Das Lichtmodul dieses Scheinwerfersystems umfasst mehrere Leuchtdiodensegmente. Diese Leuchtdiodensegmente strahlen Licht in verschiedene Abstrahlrichtungen ab. Mittels einer Steuereinrichtung werden die Größe und die Richtung des Raumwinkels, in den Licht abgestrahlt wird, dadurch geändert, dass eine Änderung der von zwei oder mehr Leuchtdiodensegmenten abgegebenen Strahlungsintensität vorgenommen wird, und zwar in Abhängigkeit von Fahrparametern, die eine Fahrsituation kennzeichnen. Der von den Leuchtdiodensegmenten abgestrahlte Lichtstrom wird dabei insbesondere mittels einer Pulsweitenmodulation des Versorgungsstroms geregelt. Ferner wird die Breite der Gesamtlichtverteilung durch Helligkeitsanpassungen der einzelnen Leuchtdiodensegmente gesteuert.

Aus der DE 10 2011 077 636 A1 ist ein Lichtmodul eines Kraftfahrzeugs zur Erzeugung einer Spotverteilung einer Fernlicht-Lichtverteilung bekannt. In diesem Fall wird die Spotlichtverteilung einer durch ein separates Lichtmodul erzeugten Grundlichtverteilung überlagert. Dabei kann durch mechanisches Verschwenken des Lichtmoduls in horizontaler Richtung auch eine Kurvenlichtfunktion bereitgestellt werden.

Schließlich ist aus der DE 10 2008 036 193 A1 ein Scheinwerfersystem für ein Kraftfahrzeug bekannt, welches ein erstes Lichtmodul zum Erzeugen einer Abblendlichtgrundverteilung und ein zweites Lichtmodul zum Erzeugen einer Fernlichtgrundverteilung aufweist. Zusätzlich weist das Scheinwerfersystem ein drittes Lichtmodul mit einem LED-Array mit einzeln ansteuerbaren Leuchtdioden zur Erzeugung einer dritten Lichtverteilung auf. Mit dem dritten Lichtmodul kann durch gezieltes Ansteuern der einzelnen Leuchtdioden ein variabler Spot erzeugt werden, mit dem die Grundlichtverteilungen der ersten beiden Lichtmodule ergänzt werden können. Mittels der dritten Lichtverteilung kann in Verbindung mit der von dem ersten Lichtmodul erzeugten Abblendlichtgrundverteilung ein vollständiges asymmetrisches Abblendlicht bereitgestellt werden. Ferner kann der Schwerpunkt, das heißt das Helligkeitsmaximum der dritten Lichtverteilung und damit auch der Gesamtlichtverteilung, verschoben werden, sodass eine Kurvenlichtfunktion bereitgestellt werden kann.

Bei Scheinwerfersystemen mit Kurvenlichtfunktion ergibt sich das Bedürfnis, diese Lichtfunktion so kostengünstig wie möglich bereitzustellen. Zwar sind Matrixscheinwerfer mit Hochleistungsleuchtdioden bekannt, mit denen sowohl die Abblendlicht- und Fernlichtfunktion als auch eine Kurvenlichtfunktion bereitgestellt werden können. Jedoch sind solche Matrixscheinwerfer sehr teuer. Kostengünstigere Lösungen ergänzen herkömmliche Scheinwerfer für die Abblendlichtfunktion um Lichtmodule, welche die Kurvenlichtfunktion bereitstellen. Hierbei ergibt sich allerdings das Problem, dass solche Scheinwerfersysteme relativ viel Bauraum beanspruchen. Im Hinblick auf die Aerodynamik und das Design des Fahrzeugs ist es jedoch erwünscht, dass die lichttechnische Komponenten nur sehr wenig Bauraum beanspruchen und die von dem Scheinwerfersystem auf der Außenhaut des Fahrzeugs eingenommene Fläche möglichst klein ist. Bei einer Kurvenlichtfunktion ergibt sich das zusätzliche Problem, dass ein Schwenken des Lichtkegels in Richtung der Kurve dazu führen kann, dass es zu einer Abschattung des Lichtkegels durch andere Teile der Fahrzeugkarosserie kommen kann.

Der vorliegenden Erfindung liegt daher die Aufgabe zugrunde, ein Scheinwerfersystem und ein Verfahren der eingangs genannten Art bereitzustellen, welche kostengünstig herstellbar beziehungsweise umsetzbar sind und welche einen geringen Bauraumbedarf im Fahrzeug beanspruchen.

Erfindungsgemäß wird diese Aufgabe durch ein Scheinwerfersystem mit den Merkmalen des Anspruchs 1 und ein Verfahren mit den Merkmalen des Anspruchs 2 gelöst. Vorteilhafte Ausgestaltungen und Weiterbildungen dieses Scheinwerfersystems und dieses Verfahrens ergeben sich aus den abhängigen Ansprüchen.

Das erfindungsgemäße Scheinwerfersystem ist dadurch gekennzeichnet, dass die matrixartig angeordneten Leuchtdiodeneinheiten des zweiten Lichtmoduls genau zwei Horizontalzeilen aufweisen, nämlich eine erste Horizontalzeile und eine zweite Horizontalzeile. Des Weiteren ist bei dem erfindungsgemäßen Scheinwerfersystem mittels der Lichtemission der ersten Horizontalzeile der Leuchtdiodeneinheiten eine Abstrahlcharakteristik erzeugbar mit einer unteren zweiten Hell-Dunkel-Grenze, welche unterhalb der ersten Hell-Dunkel-Grenze des Abblendlichts liegt, einer oberen dritten Hell-Dunkel-Grenze, welche oberhalb der ersten Hell-Dunkel-Grenze des Abblendlichts liegt, und einer seitlichen vierten Hell-Dunkel-Grenze auf der der Fahrerseite zugewandten Seite der Lichtemission des zweiten Lichtmoduls. Ferner sind bei dem erfindungsgemäßen Scheinwerfersystem zum Bereitstellen einer Kurvenlichtfunktion die Steuereinheit, die Kurvenerfassungseinheit und das zweite Lichtmodul so ausgebildet, dass ein Kurvenlichtwinkel, den der äußerste der Lichtstrahlen der Lichtemission der ersten Horizontalzeile der Leuchtdiodeneinheiten, welcher die seitliche vierte Hell-Dunkel-Grenze erzeugt, mit der Fahrzeuglängsachse in horizontaler Richtung einschließt, veränderbar ist, und dass dieser Kurvenlichtwinkel vom Radius der von der Kurvenerfassungseinheit erfassten Kurve abhängt.

Unter einer Hell-Dunkel-Grenze wird in dieser Schrift eine Linie einer Lichtverteilung verstanden, wobei sich bei der Hell-Dunkel-Grenze die Beleuchtungsstärke deutlich erkennbar verändert. Bei der Bestimmung der Lage der Hell-Dunkel-Grenze wird ein vertikal ausgerichteter Messschirm in 25 m Entfernung von der Lichtquelle betrachtet, wobei die optische Achse horizontal ausgerichtet ist, durch den Brennpunkt des zugeordneten Scheinwerfers beziehungsweise Lichtmoduls verläuft und senkrecht auf einen Nullpunkt des Messschirms trifft. Es ergibt sich dann eine Horizontalebene, welche durch den Brennpunkt des Scheinwerfers beziehungsweise des Lichtmoduls und den Nullpunkt des Messschirms geht, sowie eine Vertikalebene, welche auch durch den Brennpunkt des Schweinwerfers beziehungsweise des Lichtmoduls und den Nullpunkt des Messschirms geht. Die Lage der Hell-Dunkel-Grenze kann in diesem Fall beispielsweise so definiert werden, dass bei einem vertikalen Schnitt bei einem konstanten Winkel die Hell-Dunkel-Grenze bei dem Wendepunkt der logarithmischen Beleuchtungsstärkekurve der Lichtverteilung liegt. Durch die Position der Hell-Dunkel-Grenze können die Einstellung und Ausrichtung eines Scheinwerfers beziehungsweise eines Lichtmoduls eindeutig definiert werden.

Die Fahrerseite ist in dieser Schrift so definiert, dass sie bei Rechtsverkehr auf der linken Seite einer Mittelachse, welche durch den Brennpunkt des ersten Lichtmoduls geht, liegt, sodass die Beifahrerseite bei Rechtsverkehr auf der rechten Seite dieser Mittelachse liegt. Umgekehrt ist bei Linksverkehr die Fahrerseite auf der rechten Seite der Mittelachse und die Beifahrerseite auf der linken Seite der Mittelachse. Die Mittelachse schneidet somit auch den Nullpunkt des Messschirms.

Das erfindungsgemäße Scheinwerfersystem umfasst somit ein erstes Lichtmodul, welches das asymmetrische Abblendlicht vollständig erzeugen kann. Dies bedeutet, dass auf der Fahrerseite der Mittelachse eine obere horizontal ausgerichtete Hell-Dunkel-Grenze gebildet wird. Es wird darauf hingewiesen, dass die horizontale Ausrichtung innerhalb bestimmter Toleranzbereiche liegen kann. Bei der Einstellung dieser horizontal ausgerichteten Hell-Dunkel-Grenze wird das Lichtmodul üblicherweise in vertikaler Richtung so eingestellt, dass ein zunächst nach unten geneigter Lichtstrahl so angehoben wird, dass er sich in seiner Soll-Lage 1% (25 cm bei dem Messschirm) unter der Horizontalebene befindet, welche den Brennpunkt des Lichtmoduls schneidet. Bei der Vertikalebene, welche den Brennpunkt des Lichtmoduls schneidet, ergibt sich dann zur Beifahrerseite hin ein Knick, der in Richtung der Beifahrerseite ansteigt. Dieser Knick schließt üblicherweise einen Winkel von 15° mit der Horizontalen ein. Es sind jedoch auch andere Winkel für diesen Knick möglich. Die Hell-Dunkel-Grenze steigt dann weiter auf der Beifahrerseite bis über die Horizontalebene an und flacht sich dann ab, sodass wieder eine im Wesentlichen horizontal ausgerichtete Hell-Dunkel-Grenze auf der Beifahrerseite gebildet wird, die jedoch höher liegt als die obere erste Hell-Dunkel-Grenze auf der Fahrerseite.

Bei dem erfindungsgemäßen Scheinwerfersystem wird vorteilhafterweise ein üblicherweise bereits im Fahrzeug vorgesehenes erstes Lichtmodul für ein asymmetrisches Abblendlicht mit einem zweiten Lichtmodul mit matrixartig angeordneten Leuchtdiodeneinheiten so kombiniert, dass für die Anordnung des zweiten Lichtmoduls der Bauraumbedarf sehr gering ist, dennoch das asymmetrische Abblendlicht des ersten Lichtmoduls so ergänzt werden kann, dass eine Kurvenlichtfunktion bereitgestellt wird. Hierfür reicht es aus, dass das zweite Lichtmodul genau zwei Horizontalzeilen mit Leuchtdiodeneinheiten aufweist. Das zweite Lichtmodul kann somit insbesondere schlitzartig ausgebildet sein. Durch die geometrische Anordnung der zweiten und dritten Hell-Dunkel-Grenze der Abstrahlcharakteristik des zweiten Lichtmoduls, die unterhalb und oberhalb der Hell-Dunkel-Grenze des Abblendlichts liegen, kann das asymmetrische Abblendlicht sehr effizient für die Kurvenlichtfunktion ergänzt werden. Vorteilhafterweise ist hierfür die untere zweite Hell-Dunkel-Grenze der Abstrahlcharakteristik des zweiten Lichtmoduls und/oder die obere dritte Hell-Dunkel-Grenze dieser Abstrahlcharakteristik auch horizontal ausgerichtet. Die beiden Hell-Dunkel-Grenzen verlaufen somit im Wesentlichen parallel zur ersten Hell-Dunkel-Grenze auf der Fahrerseite des asymmetrischen Abblendlichts. Mittels der seitlichen vierten Hell-Dunkel-Grenze der Lichtemission des zweiten Lichtmoduls kann nun die Kurvenlichtfunktion dadurch bereitgestellt werden, dass diese seitliche Hell-Dunkel-Grenze hinsichtlich ihres Winkels mit der Fahrzeuglängsachse in horizontaler Richtung in Abhängigkeit vom Radius der Kurve geschwenkt wird.

In einer Ausgangsstellung liegt dabei die seitliche vierte Hell-Dunkel-Grenze der Lichtemission des zweiten Lichtmoduls insbesondere im Bereich des ansteigenden Teils des Knicks des asymmetrischen Abblendlichts, sodass durch das zweite Lichtmodul die Ausleuchtung auf der Beifahrerseite, das heißt bei Rechtsverkehr auf der rechten Seite, verbessert wird. Bei einer Kurve in Richtung der Fahrerseite, das heißt bei einer Linkskurve bei Rechtsverkehr, bei welcher das herkömmliche asymmetrische Abblendlicht eine ungenügende Ausleuchtung der Fahrbahn bereitstellt, kann nun die seitliche vierte Hell-Dunkel-Grenze der Lichtemission des zweiten Lichtmoduls zur Fahrerseite hin geschwenkt werden, um eine bessere Ausleuchtung der Kurve bereitzustellen. Auf diese Weise kann der Knick des asymmetrischen Abblendlichts in Richtung der Fahrerseite verlagert werden, um die Kurvenlichtfunktion bereitzustellen.

Die seitliche vierte Hell-Dunkel-Grenze der Lichtemission des zweiten Lichtmoduls kann vertikal oder schräg, insbesondere in einem 15°-Winkel zur Horizontalen, ausgerichtet sein. Sie verbindet auf dem Messschirm die untere zweite Hell-Dunkel-Grenze mit der oberen dritten Hell-Dunkel-Grenze der Lichtemission des zweiten Lichtmoduls.

Die Leuchtdiodeneinheiten des zweiten Lichtmoduls können nur eine Leuchtdiode oder mehrere Leuchtdioden umfassen. Für jede der Leuchtdiodeneinheiten wird mittels der Steuereinheit jedoch eine Lichtemission mit definierter, veränderbarer Lichtintensität, die in einem begrenzten Raumwinkel abgestrahlt wird, erzeugt. Die Lichtemission einer Leuchtdiodeneinheit ist somit homogen, jedoch veränderbar.

Unter einer Horizontalzeile der matrixartig angeordneten Leuchtdiodeneinheiten werden in dieser Schrift mehrere in horizontaler Richtung nebeneinander angeordnete Leuchtdiodeneinheiten verstanden. Mittels einer Horizontalzeile können insbesondere keine veränderlichen Beleuchtungsstärken in vertikaler Richtung erzeugt werden. Eine Leuchtdiodeneinheit beleuchtet insbesondere ein bestimmtes Segment der
Abstrahlcharakteristik der Lichtemission des zweiten Lichtmoduls mit insgesamt veränderbarer, aber homogener Beleuchtungsstärke. Die Überlagerung der von den Leuchtdiodeneinheiten der Horizontalzeile erzeugten Beleuchtungsstärken ergibt die Lichtverteilung dieser Horizontalzeile des zweiten Lichtmoduls. Die von den Leuchtdiodeneinheiten erzeugten Lichtverteilungen können sich dabei in horizontaler Richtung überlappen, wodurch Schwankungen der Lichtintensität in horizontaler Richtung entstehen können. Die von den Leuchtdiodeneinheiten
beleuchteten Segmente liegen jedoch insbesondere seitlich nebeneinander, sodass sich jeweils die obere und untere Hell-Dunkel-Grenze eines Segments an die jeweilige Hell-Dunkel-Grenze eines benachbarten Segments anschließt und auf diese Weise die untere zweite und die obere dritte Hell-Dunkel-Grenze der Lichtemission des zweiten Lichtmoduls gebildet wird.

Mittels der Kurvenerfassungseinheit des erfindungsgemäßen Scheinwerfersystems kann beispielsweise vorausschauend der Radius einer Kurve in Fahrtrichtung vor dem Fahrzeug erfasst werden, und zwar auch dann, wenn das Fahrzeug die Kurve noch nicht befährt. Hierfür kann die Kurvenerfassungseinheit beispielsweise auf Daten des Navigationssystems oder einer Kamera zugreifen, um Daten über die demnächst zu durchfahrende Kurve zu gewinnen, insbesondere um den Radius der Kurve zu erfassen. Vorteilhafterweise wird der Radius in einem definierten Abstand vor dem Fahrzeug erfasst. Der Kurvenlichtwinkel wird dann in Abhängigkeit von diesem Radius bestimmt.

Alternativ oder zusätzlich kann der Radius der gerade durchfahrene Kurve erfasst werden. In diesem Fall kann die Kurvenerfassungseinheit auf Daten von Sensoren des Fahrzeugs zugreifen, beispielsweise auf Sensoren für die Querbeschleunigung, den Lenkwinkel und/oder die Fahrzeuggeschwindigkeit. Anhand dieser Daten kann die Kurvenerfassungseinheit den Radius der Kurve bestimmen, die gerade durchfahren wird. Der Kurvenlichtwinkel wird dann in Abhängigkeit von diesem Radius bestimmt.

Unter dem Kurvenlichtwinkel wird dabei der Winkel verstanden, den einer, insbesondere der äußerste, der Lichtstrahlen, welcher in Richtung der seitlichen vierten Hell-Dunkel-Grenze der Lichtemission des zweiten Lichtmoduls abgestrahlt wird, mit der Fahrzeuglängsachse einschließt. Bei einer Kurve in Richtung der Fahrerseite vergrößert sich dabei der Kurvenlichtwinkel in Richtung der Fahrerseite des Fahrzeugs, das heißt, in negativer Richtung eines Koordinatensystems des Messschirms. Bei einer Kurve in Richtung der Beifahrerseite vergrößert sich hingegen der Kurvenlichtwinkel in Richtung der Beifahrerseite des Fahrzeugs, das heißt, in positiver Richtung eines Koordinatensystems des Messschirms.

Gemäß einer anderen Ausgestaltung ist mittels genau einer Horizontalzeile, nämlich der ersten Horizontalzeile, der matrixartig angeordneten Leuchtdiodeneinheiten des zweiten Lichtmoduls die Kurvenlichtfunktion bereitstellbar, mittels der zweiten Horizontalzeile der matrixartig angeordneten Leuchtdiodeneinheiten ist eine Fernlichtfunktion bereitstellbar. Hierdurch wird vorteilhafterweise erreicht, dass der Funktionsumfang des erfindungsgemäßen Scheinwerfersystems erweitert wird, wobei es dennoch einen relativ geringen Bauraumbedarf besitzt.

Gemäß einer Ausgestaltung des erfindungsgemäßen Scheinwerfersystems kann das erste Lichtmodul ein Projektions- oder Reflexionsscheinwerfer sein. Die Lichtquelle des ersten Lichtmoduls ist insbesondere eine Gasentladungslampe oder eine Halogenlampe. Gemäß einer anderen Ausgestaltung des erfindungsgemäßen Scheinwerfersystems ist die erste Lichtquelle des ersten Lichtmoduls eine Leuchtdiode oder sie umfasst mehrere Leuchtdioden. Auch in diesem Fall erzeugen jedoch die Leuchtdioden oder die Leuchtdiode des ersten Lichtmoduls das vollständige asymmetrische Abblendlicht, wohingegen die Leuchtdioden des zweiten Lichtmoduls die Leuchtdioden des ersten Lichtmoduls ergänzen, sodass ein Kurvenlicht bereitgestellt werden kann. Wenn auch die Lichtquelle des ersten Lichtmoduls von Leuchtdioden bereitgestellt wird, ist der Bauraumbedarf des Scheinwerfersystems noch geringer als in dem Fall, bei dem diese Lichtquelle von einer Halogenbirne oder einer Gasentladungslampe bereitgestellt wird. Allerdings erhöhen sich in diesem Fall auch die Kosten für die Herstellung des Scheinwerfersystems.

Bei dem erfindungsgemäßen Verfahren zum Bereitstellen einer Kurvenlichtfunktion erzeugt ein erstes Lichtmodul ein asymmetrisches Abblendlicht, das auf der Fahrerseite einer Mittelachse eine obere Hell-Dunkel-Grenze besitzt, die horizontal ausgerichtet ist. Des Weiteren wird bei dem Verfahren der Radius einer Kurve in Fahrtrichtung des Fahrzeugs erfasst. Ein zweites Lichtmodul, das mehrere Leuchtdiodeneinheiten umfasst, die matrixartig mit genau zwei Horizontalzeilen, nämlich einer ersten Horizontalzeile und einer zweiten Horizontalzeile, angeordnet sind, wird so angesteuert, dass die Lichtemission der ersten Horizontalzeile der Leuchtdiodeneinheiten eine Abstrahlcharakteristik erzeugt mit einer unteren zweiten Hell-Dunkel-Grenze, welche unterhalb der ersten Hell-Dunkel-Grenze des Abblendlichts liegt, einer oberen dritten Hell-Dunkel-Grenze, welche oberhalb der ersten Hell-Dunkel-Grenze des Abblendlichts liegt, und einer seitlichen vierten Hell-Dunkel-Grenze, auf der der Fahrerseite zugewandten Seite der Lichtemission des zweiten Lichtmoduls. Zum Bereitstellen der Kurvenlichtfunktion wird ein Kurvenlichtwinkel, den der äußerste der Lichtstrahlen der Lichtemission der ersten Horizontalzeile der Leuchtdiodeneinheiten, welcher die seitliche vierte Hell-Dunkel-Grenze erzeugt, mit der Fahrzeuglängsachse in horizontaler Richtung einschließt, verändert, wobei der Kurvenlichtwinkel vom Radius der erfassten Kurve abhängt. Erfindungsgemäß wird dabei mittels genau einer Horizontalzeile, nämlich der ersten Horizontalzeile, der matrixartig angeordneten Leuchtdiodeneinheiten des zweiten Lichtmoduls die Kurvenlichtfunktion bereitgestellt wird und mittels der zweiten Horizontalzeile der matrixartig angeordneten Leuchtdiodeneinheiten eine Fernlichtfunktion bereitgestellt.

Das erfindungsgemäße Verfahren kann insbesondere mit dem vorstehend beschriebenen Scheinwerfersystem ausgeführt werden. Es weist daher auch dieselben Vorteile wie das vorstehend beschriebene Scheinwerfersystem auf.

Betrachtet man den vorstehend beschriebenen Messschirm zur Definition der Lichtverteilung, welche sich aus der Lichtemission des ersten und zweiten Lichtmoduls ergibt, ist die vertikale Ausdehnung der Lichtemission des zweiten Lichtmoduls, das heißt, der vertikale Winkel zwischen Lichtstrahlen, welche die untere zweite beziehungsweise obere dritte Hell-Dunkel-Grenze bilden, in einem Bereich von 2° bis 3°. Dabei liegt die obere dritte Hell-Dunkel-Grenze der Lichtemission des zweiten Lichtmoduls 1° bis 2°, insbesondere 1,5°, oberhalb der ersten oberen Hell-Dunkel-Grenze auf der Fahrerseite des Abblendlichts. Die untere zweite Hell-Dunkel-Grenze der Lichtemission des zweiten Lichtmoduls liegt 0° bis 3°, insbesondere 1° bis 3°, unterhalb der oberen ersten Hell-Dunkel-Grenze auf der Fahrerseite des Abblendlichts, insbesondere 1,75° unterhalb dieser Hell-Dunkel-Grenze des Abblendlichts. Dabei liegt die obere erste horizontal ausgerichtete Hell-Dunkel-Grenze auf der Fahrerseite des Abblendlichts üblicherweise bei ca. -0,5° (insbesondere bei -0,57°) relativ zur Horizontalebene, die durch den Brennpunkt des ersten Lichtmoduls geht. Die untere zweite Hell-Dunkel-Grenze der Lichtemission des zweiten Lichtmoduls liegt in diesem Fall dann insbesondere bei -2,25° und die obere dritte Hell-Dunkel-Grenze der Lichtemission des zweiten Lichtmoduls bei +1°.

Die seitliche vierte Hell-Dunkel-Grenze auf der der Fahrerseite zugewandten Seite der Lichtemission des zweiten Lichtmoduls kann einen Winkel mit der Horizontalebene einschließen, der in einem Bereich von 90° bis 10° liegt, wobei die Neigung dieser seitlichen vierten Hell-Dunkel-Grenze in dieselbe Richtung geht wie der Knick des asymmetrischen Abblendlichts auf der Beifahrerseite. Der Mittelpunkt der seitlichen vierten Hell-Dunkel-Grenze befindet sich in horizontaler Richtung insbesondere in einem Bereich von 20% bis 30% der horizontalen Erstreckung des Anstiegs der Hell-Dunkel-Grenze nach dem Knick des asymmetrischen Abblendlichts bis zum Übergang in eine horizontale Hell-Dunkel-Grenze auf der Beifahrerseite des Fahrzeugs, wenn keine aktuelle oder bevorstehende Kurvenfahrt erfasst wurde. In diesem Fall ergibt sich somit vorteilhafterweise ein weicher Übergang von der von dem zweiten Lichtmodul erzeugten Lichtverteilung zu der Lichtverteilung des asymmetrischen Abblendlichts bei einer Geradeausfahrt.

Bei einer Ausgestaltung des erfindungsgemäßen Verfahrens werden die Leuchtdiodeneinheiten des zweiten Lichtmoduls so angesteuert, dass in horizontaler Richtung Segmente mit unterschiedlicher Lichtintensität beleuchtet werden. Dabei nimmt der Horizontalwinkel der Segmente von der der Fahrerseite zugewandten Seite zu der gegenüberliegenden Seite, d. h. nach außen zur Beifahrerseite, hin zu. Ferner kann der Horizontalwinkel der Segmente in der Mitte am geringsten sein und nach außen hin nimmt der Horizontalwinkel der Segmente zu. Bei einer Geradeausfahrt und/oder bei einer Kurvenfahrt sind somit die innenliegenden Segmente schmäler als die außenliegenden Segmente. Die schmaleren innenliegenden Segmente ermöglichen es, bei der vertikalen vierten Hell-Dunkel-Grenze, deren Winkelposition bei der Kurvenlichtfunktion verändert wird, eine feinere Abstufung der Lichtverteilung zu erreichen als in den Außenbereichen, welche im Wesentlichen vollständig der Lichtverteilung des asymmetrischen Abblendlichts überlagert sind.

Zum Erzeugen der Segmente werden die Leuchtdiodeneinheiten des zweiten Lichtmoduls insbesondere so angesteuert, dass die von einer Leuchtdiodeneinheit emittierte Lichtintensität sich von den von benachbarten Leuchtdiodeneinheiten emittierten Lichtintensitäten unterscheidet.

Der Horizontalwinkel der innenliegenden Segmente kann beispielsweise in einem Bereich von 0,5° bis 3°, insbesondere von 1° bis 2° liegen. Der Horizontalwinkel der äußeren Segmente kann hingegen in einem Bereich von 5° bis 20°, insbesondere von 6° bis 10°, liegen.

Gemäß einer weiteren Ausgestaltung des erfindungsgemäßen Verfahrens werden, wie bereits vorstehend erläutert, die Leuchtdiodeneinheiten des zweiten Lichtmoduls so angesteuert, dass in horizontaler Richtung Segmente mit unterschiedlicher Lichtintensität gebildet werden. In diesem Fall nimmt alternativ oder zusätzlich die Lichtintensität der Segmente von der der Fahrerseite zugewandten Seite zu der gegenüberliegenden Seite nach außen hin ab. Es wird in diesem Fall somit nicht (nur) der Horizontalwinkel der Segmente variiert, sondern (auch) die Lichtintensität der Segmente, sodass sie z. B. von innen nach außen abnimmt. Auf diese Weise ist die Beleuchtungsstärke der Segmente, welche in der Nähe der vertikalen seitlichen vierten Hell-Dunkel-Grenze angeordnet sind, besonders hoch, sodass die Wirkung der Kurvenlichtfunktion auf der Fahrbahn vom Fahrer sehr klar erkennbar ist. Hierdurch wird vorteilhafterweise gerade in diesem für die Kurvenfahrt wesentlichen Bereich der Fahrbahn die Beleuchtungsstärke erhöht.

Gemäß einer weiteren Ausgestaltung des erfindungsgemäßen Verfahrens werden in Abhängigkeit von dem Radius der erfassten Kurve die Leuchtdiodeneinheiten des zweiten Lichtmoduls so angesteuert, dass sich in Horizontalrichtung ein Lichtintensitätsverlauf ergibt, bei dem in einem Segment bzw. Horizontalwinkelbereich die Lichtintensität maximal ist und in benachbarten Segmenten bzw. Horizontalwinkelbereichen die Lichtintensität geringer ist. In diesem Fall wird insbesondere der Horizontalwinkel, d. h. die Breite, des Segments bzw. Horizontalwinkelbereichs mit maximaler Lichtintensität vergrößert, wenn sich der Kurvenlichtwinkel vergrößert. Dabei kann diese Vergrößerung des Horizontalwinkels des Segments mit maximaler Lichtintensität insbesondere nicht durch einer Veränderung der Abstrahlung der Leuchtdiodeneinheiten erreicht werden, sondern dadurch, dass eine andere Leuchtdiodeneinheit, die ein Segment mit einem anderen Horizontalwinkel beleuchtet, dasjenige Segment bereitstellt, welches die maximale Lichtintensität aufweist.

Die Lichtintensitäten, die von den Leuchtdiodeneinheiten des zweiten Lichtmoduls emittiert werden, weisen in horizontaler Richtung einen bestimmten Intensitätsverlauf auf. In einem bestimmten Horizontalwinkelbereich, d. h. insbesondere bei einem bestimmten Segment, ist die Lichtintensität maximal. Der Horizontalwinkel definiert demnach die Größe des Bereichs der maximalen Lichtintensität. Ferner kann ein Maximumwinkel definiert werden, den die Winkelhalbierende des Horizontalwinkelbereichs beziehungsweise des Segments mit der Fahrzeuglängsachse einschließt. Dieser Maximumwinkel definiert die horizontale Winkelposition des Bereichs mit maximaler Lichtintensität relativ zur Fahrzeuglängsachse. Dieser Maximumwinkel kann auch vom Radius der erfassten Kurve abhängig, insbesondere wenn der Bereich mit maximaler Lichtintensität nicht direkt bei der seitlichen vierten Hell-Dunkel-Grenze der Lichtemission des zweiten Lichtmoduls liegt. Bevorzugt wird auch der Maximumwinkel in Abhängigkeit vom Radius der erfassten Kurve in Richtung der Kurve verschwenkt.

Es wird darauf hingewiesen, dass die Lichtemissionsrichtung des zweiten Lichtmoduls nicht mechanisch geschwenkt wird, sondern ein Schwenken der seitlichen vierten Hell-Dunkel-Grenze oder des Maximumwinkels dadurch erreicht wird, dass die von den einzelnen Leuchtdiodeneinheiten emittierten Lichtintensitäten verändert werden. In diesem Fall verändern sich somit die horizontalen Breiten der Segmente, die von den einzelnen Leuchtdiodeneinheiten beleuchtet werden, nicht, es werden nur die Beleuchtungsstärken bei diesen Segmenten verändert. Beim Schwenken der seitlichen vierten Hell-Dunkel-Grenze des zweiten Lichtmoduls werden somit seitlich neben der seitlichen vierten Hell-Dunkel-Grenze Segmente beleuchtet, die vorher nicht beleuchtet wurden, sodass sich die seitliche vierte Hell-Dunkel-Grenze in Richtung des beleuchteten Segments verschiebt. Gleichzeitig kann die Intensität bei beispielsweise dem Segment, welches vorher die seitliche vierte Hell-Dunkel-Grenze gebildet hat, verringert werden.

Gemäß einer bevorzugten Ausgestaltung des erfindungsgemäßen Verfahrens werden die Leuchtdiodeneinheiten des zweiten Lichtmoduls so angesteuert, dass die seitliche vierte Hell-Dunkel-Grenze von dem Horizontalwinkelbereich mit maximaler Lichtintensität gebildet wird. Hierdurch wird erreicht, dass die die Kurvenlichtfunktion bestimmende seitliche vierte Hell-Dunkel-Grenze auf der Fahrbahn besonders klar und deutlich erkennbar ist.

Gemäß einer weiteren Ausgestaltung des erfindungsgemäßen Verfahrens liegt die seitliche vierte Hell-Dunkel-Grenze im Bereich des Anstiegs der Hell-Dunkel-Grenze des asymmetrischen Abblendlichts auf der Beifahrerseite, wenn erfasst wurde, dass keine Kurve durchfahren wird. In diesem Fall einer Geradeausfahrt verstärkt die Lichtemission des zweiten Lichtmoduls somit den asymmetrischen Zweig des Abblendlichts auf der Beifahrerseite.

Gemäß einer weiteren Ausgestaltung des erfindungsgemäßen Verfahrens besitzt die Hell-Dunkel-Grenze des asymmetrischen Abblendlichts auf der Beifahrerseite einen weiteren horizontal ausgerichteten Bereich, der oberhalb der ersten Hell-Dunkel-Grenze auf der Fahrerseite angeordnet ist. Die obere dritte Hell-Dunkel-Grenze der Lichtemission des zweiten Lichtmoduls stimmt insbesondere im Wesentlichen mit der weiteren horizontal ausgerichteten Hell-Dunkel-Grenze auf der Beifahrerseite des asymmetrischen Abblendlichts überein. Die Lichtemission des zweiten Lichtmoduls fügt sich auf diese Weise harmonisch in die Lichtemission des asymmetrischen Abblendlichts ein, sodass mit einer geringen zusätzlichen Ausleuchtung, für welche das Scheinwerfersystem und das Verfahren wenig Bauraum benötigen, eine Kurvenlichtfunktion kostengünstig bereitstellbar ist.

Die Erfindung wird nun anhand eines Ausführungsbeispiels mit Bezug zu den Zeichnungen erläutert.
- Figur 1: zeigt ein Fahrzeug mit einem Ausführungsbeispiel des erfindungsgemäßen Scheinwerfersystems,
- Figur 2: zeigt schematisch den Aufbau des Ausführungsbeispiels des erfindungsgemäßen Scheinwerfersystems,
- Figur 3: zeigt eine Ansicht von vorne von der Leuchtdiodenmatrix des zweiten Lichtmoduls,
- Figur 4: zeigt die von dem ersten Lichtmodul erzeugte Lichtverteilung,
- Figur 5: zeigt die von dem zweiten Lichtmodul erzeugte Lichtverteilung,
- Figur 6: zeigt die von dem ersten und dem zweiten Lichtmodul erzeugte Gesamtlichtverteilung,
- Figur 7: zeigt eine Detailansicht der in Figur 6 gezeigten Gesamtlichtverteilung,
- Figur 8: zeigt schematisch die Geometrie von Lichtstrahlen, die von dem zweiten Lichtmodul emittiert werden,
- die Figuren 9A bis 9E: zeigen Lichtverteilungen einer Kurvenlichtfunktion bei einer Rechtskurve, die von einem Ausführungsbeispiel des erfindungsgemäßen Verfahrens erzeugt werden, und
- die Figuren 10A bis 10G: zeigen Lichtverteilungen einer Kurvenlichtfunktion bei einer Linkskurve, die von einem Ausführungsbeispiel des erfindungsgemäßen Verfahrens erzeugt werden.

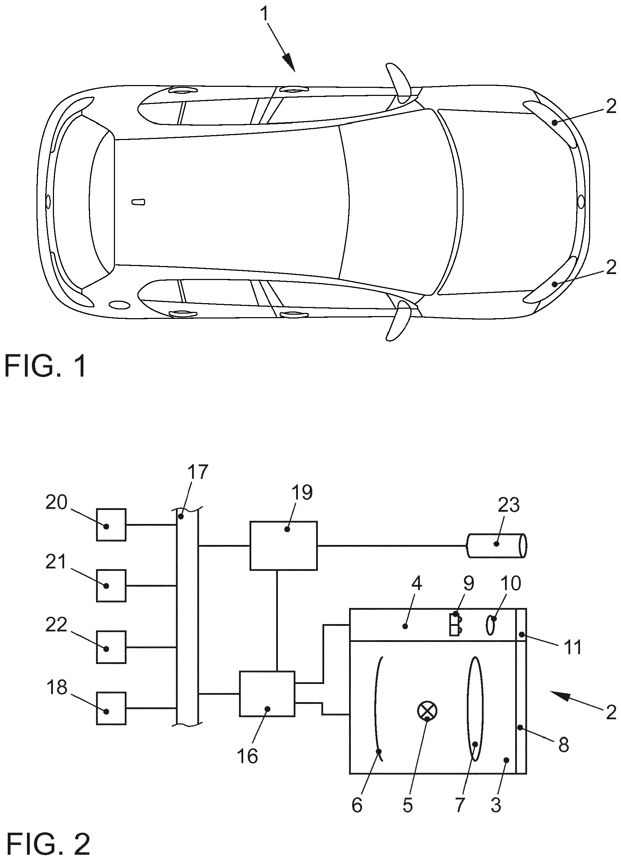

In Figur 1 ist ein Fahrzeug 1 in einer Draufsicht gezeigt, welches das erfindungsgemäße Scheinwerfersystem 2 umfasst. In Figur 2 ist schematisch der Aufbau dieses Scheinwerfersystems 2 gezeigt.

Das Scheinwerfersystem 2 weist ein erstes Lichtmodul 3 auf. Hierbei handelt es sich um einen an sich bekannten Reflexions- oder Projektionsscheinwerfer mit einer Lichtquelle 5, einem Reflektor 6, einer Projektionslinse 7 und einer Lichtabschlussscheibe 8. Bei der Lichtquelle 5 kann es sich beispielsweise um eine Halogenlampe oder eine Gasentladungslampe handeln. Ferner kann die Lichtquelle 5 auch eine Leuchtdiode oder ein Leuchtdiodenfeld sein.

Unmittelbar oberhalb des ersten Lichtmoduls 3 ist ein zweites Lichtmodul 4 angeordnet. Es ist schlitzartig ausgebildet und weist eine sehr geringe Höhe auf. In der Breite ist das zweite Lichtmodul 4 an die Breite des ersten Lichtmoduls 3 angepasst. Das zweite Lichtmodul 4 umfasst eine Leuchtdiodenmatrix 9 und, falls es für die Abstrahlcharakteristik erforderlich ist, ein Optikelement 10 sowie eine Lichtabschlussscheibe 11.

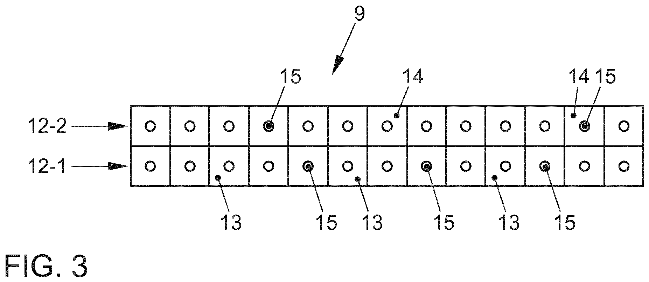

Die Leuchtdiodenmatrix 9 ist im Detail in Figur 3 gezeigt. Sie umfasst mehrere matrixartig angeordnete Leuchtdiodeneinheiten 13 und 14. Die Leuchtdiodeneinheiten 13 und 14 umfassen jeweils eine oder mehrere Leuchtdioden 15. Die Leuchtdiodeneinheiten 13 sind in einer ersten unteren Horizontalzeile 12-1 angeordnet, die Leuchtdiodeneinheiten 14 in einer zweiten oberen Horizontalzeile 12-2. Die Leuchtdiodeneinheiten 13 beziehungsweise 14 sind dabei jeweils in einer horizontal ausgerichteten Reihe nebeneinander positioniert. Insgesamt ist der Bauraumbedarf der Leuchtdiodenmatrix 9 in der Höhe sehr gering, sodass sie in das schlitzartige zweite Lichtmodul 4 integriert werden kann.

Im vorliegenden Ausführungsbeispiel besitzt jede der Horizontalzeilen 12-1 und 12-2 dreizehn Leuchtdiodeneinheiten 13 bzw. 14. Von jeder Leuchtdiodeneinheit 13 wird ein Segment für ein dynamisch anpassbares Kurvenlicht erzeugt, wie es später erläutert wird. Von den Leuchtdiodeneinheiten 14 der zweiten Horizontalzeile 12-2 kann eine Fernlichtfunktion erzeugt werden. Es wird darauf hingewiesen, dass die Leuchtdiodenmatrix 9 höchstens zwei Horizontalzeilen aufweist, damit der Bauraumbedarf in vertikaler Richtung minimiert wird.

Wieder mit Bezug zu Figur 2 sind das erste Lichtmodul 3 und das zweite Lichtmodul 4 mit einer Steuereinheit 16 gekoppelt. Die Steuereinheit 16 steuert die Lichtquelle 5 des ersten Lichtmoduls 3 und die Leuchtdiodeneinheiten 13 und 14 des zweiten Lichtmoduls 4 so an, dass sie an und aus geschaltet werden können und außerdem der von diesen Lichtquellen beziehungsweisen diesen Leuchtdiodeneinheiten 13 und 14 emittierte Lichtstrom gesteuert werden kann, wie es später erläutert wird.

Die Steuereinheit 16 ist wiederum mit einem Datenbus 17 des Fahrzeugs 1 gekoppelt. An den Datenbus 17 ist ein Sensor 20 für die Querbeschleunigung des Fahrzeugs 1, ein Sensor 21 für den Lenkwinkel des Fahrzeugs 1 und ein Geschwindigkeitssensor 22 angeschlossen. Die von diesen Sensoren 20 bis 22 aufgenommenen Daten können an die Steuereinheit 16 übertragen werden. Des Weiteren ist an den Datenbus 17 ein Navigationssystem 18 angeschlossen. Auch Daten dieses Navigationssystems 18, welche Daten zu einer geografischen Karte einschließlich Informationen über Radien von Kurven der Straßen umfassen, können an die Steuereinheit 16 übertragen werden.

In das Fahrzeug 1 ist des Weiteren eine Kamera 23 integriert, welche Bilddaten in Fahrtrichtung des Fahrzeugs 1 aufnimmt und an eine Kurvenerfassungseinheit 19 überträgt. Mittels der Kurvenerfassungseinheit 19 kann die Fahrbahn in Fahrtrichtung des Fahrzeugs 1 analysiert werden. Die Kurvenerfassungseinheit 19 kann insbesondere feststellen, ob die vor dem Fahrzeug 1 liegende Fahrbahn gerade ist oder ob sich in Fahrtrichtung eine Kurve befindet. Wenn eine Kurve erfasst worden ist, kann die Kurvenerfassungseinheit 19 bestimmen, wie groß der Radius der vorausliegenden Kurve ist. Die Radien können insbesondere für Abschnitte der Kurve bestimmt werden. Für jeden Radius wird in diesem Fall noch ermittelt, wie der Abstand dieses Abschnitts von dem Fahrzeug 1 ist. Die von der Kurvenerfassungseinheit 19 ermittelten Daten können zum einen an den Datenbus 17 und zum anderen an die Steuereinheit 16 übertragen werden.

Von der Kurvenerfassungseinheit 19 kann der Radius der in Fahrtrichtung vor dem Fahrzeug 1 liegenden Kurve auch anhand der Daten des Navigationssystems 18 bestimmt werden. Alternativ oder zusätzlich kann die Kurvenerfassungseinheit 19 auch den Radius der gerade durchfahrenen Kurve anhand der Daten der Sensoren 20 bis 22 bestimmen.

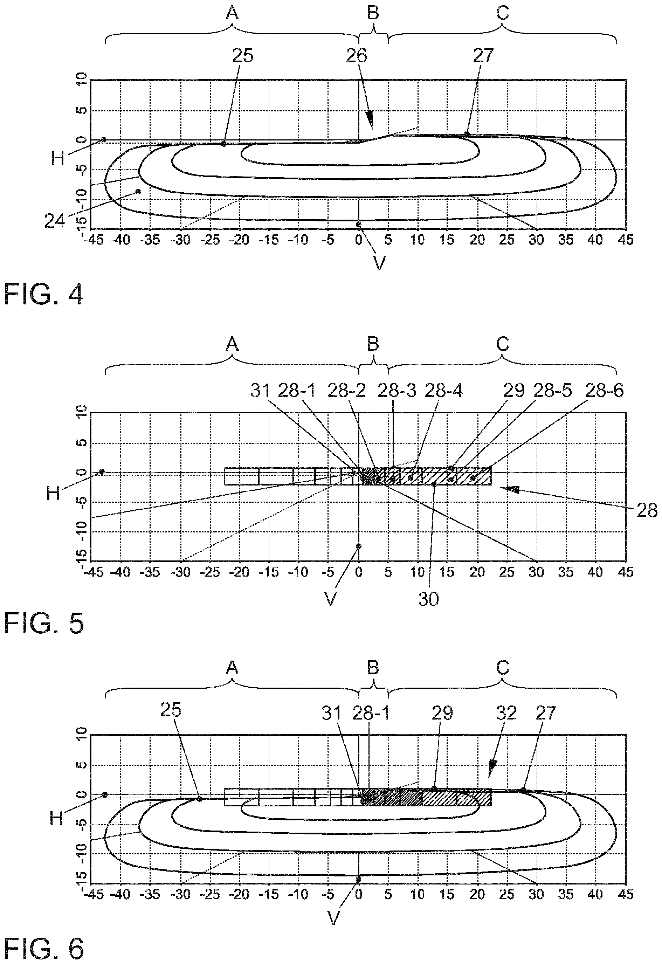

Mit Bezug zur Figur 4 wird die Abstrahlcharakteristik der Lichtemission des ersten Lichtmoduls 3 erläutert. In Figur 4 ist die Abstrahlcharakteristik des ersten Lichtmoduls 3 als Isolux-Diagramm auf einem Messschirm wiedergegeben. Der Messschirm befindet sich in 25 m Entfernung von dem ersten Lichtmodul 3, nämlich vom Brennpunkt dieses ersten Lichtmoduls 3. Der Messschirm ist senkrecht zur Längsachse des Fahrzeugs 1 ausgerichtet und der Nullpunkt des Messschirms, bei dem sich die Horizontale H und die Vertikale V schneiden, befindet sich sowohl vertikal als auch horizontal bei der Position des Brennpunkts des ersten Lichtmoduls 3. Die von dem ersten Lichtmodul 3 erzeugte Lichtverteilung 24 kann durch den Verlauf der Hell-Dunkel-Grenze charakterisiert werden. Auf der Fahrerseite A des Fahrzeugs 1, das heißt, bei Rechtsverkehr auf der linken Seite, ist die obere Hell-Dunkel-Grenze 25 der Lichtverteilung 24 horizontal ausgerichtet. Sie befindet sich ca. 0,5° unterhalb der Horizontalen H. Bei der Vertikalen V weist die Hell-Dunkel-Grenze einen Knick auf, sodass in einem Übergangsbereich B bei einem Horizontalwinkel von 0° bis 5° die Hell-Dunkel-Grenze 26 ansteigt (negative Horizontalwinkel befinden sich auf der Fahrerseite der Vertikalen V und positive Horizontalwinkel befinden sich auf der Beifahrerseite bezüglich der Vertikalen V). Der ansteigende Teil der Hell-Dunkel-Grenze 26 schließt üblicherweise einen Winkel von 15° mit einer Horizontalebene ein. Im Anschluss an den Übergangsbereich B geht die Hell-Dunkel-Grenze 27 auf der Beifahrerseite C wieder in die Horizontale über, wobei sich die horizontal ausgerichtete Hell-Dunkel-Grenze 27 auf der Beifahrerseite oberhalb der horizontal ausgerichteten Hell-Dunkel-Grenze 25 auf der Fahrerseite befindet. Die horizontal ausgerichtete Hell-Dunkel-Grenze 27 auf der Beifahrerseite kann beispielsweise 1° oberhalb der Horizontalen H und somit 1,5° oberhalb der Hell-Dunkel-Grenze 25 liegen. Bei der Lichtverteilung 24 des ersten Lichtmoduls 3 handelt es sich somit um ein herkömmliches asymmetrisches Abblendlicht, welches der im Jahr 2015 gültigen europäischen Norm ECE-R112 bzw. ECE-R98 genügt. Wenn die Lichtquelle 5 eine Leuchtdiode oder ein Leuchtdiodenfeld ist, genügt das asymmetrisches Abblendlicht der im Jahr 2015 gültigen europäischen Norm ECE-R123. Das erste Lichtmodul 3 und die von diesem Lichtmodul erzeugte Lichtverteilung 24 sind somit an sich bekannt.

In Figur 5 ist die Abstrahlcharakteristik der Lichtverteilung 28 des zweiten Lichtmoduls 4 gezeigt. Die Lichtverteilung 28 wird dabei nur von den Leuchtdiodeneinheiten 13 der Horizontalzeile 12-1 erzeugt. Die Lichtverteilung 28 ist länglich in Horizontalrichtung ausgebildet. Sie umfasst bei einer Ausgangslichtverteilung für eine Gradeausfahrt die beleuchteten Segmente 28-1 bis 28-6. Diese sechs Segmente der Lichtverteilung 28 werden von den beifahrerseitigen 6 Leuchtdiodeneinheiten 13 erzeugt, wobei jede Leuchtdiodeneinheit 13 die Beleuchtung eines der Segmente 28-1 bis 28-6 bereitstellt. Die Beleuchtungsstärke innerhalb eines Segments ist im Wesentlichen homogen. Die Größe der Beleuchtungsstärke kann jedoch mittels der Steuereinheit 6 verändert werden. In vertikaler Richtung weisen die Segmente 28-1 bis 28-6 dieselben Abmessungen auf, sodass sie eine obere horizontale Hell-Dunkel-Grenze 29 und eine untere horizontale Hell-Dunkel-Grenze 30 bilden.

Die obere horizontale Hell-Dunkel-Grenze 29 der Lichtverteilung 28 des zweiten Lichtmoduls 4 ist +1° oberhalb der Horizontalen H angeordnet, das heißt, +1,5° oberhalb der oberen horizontalen Hell-Dunkel-Grenze 25 auf der Fahrerseite des Abblendlichts. Die untere auch horizontal ausgerichtete Hell-Dunkel-Grenze 30 der Lichtverteilung 28 des zweiten Lichtmoduls 4 ist bei einem Winkel von -2,25° zu der Horizontalen H angeordnet, das heißt, 1,75° unterhalb der Hell-Dunkel-Grenze 25.

Das der Fahrerseite zugewandte Segment 28-1 bildet außerdem eine seitliche Hell-Dunkel-Grenze 31. Diese ist bei dem vorliegenden Ausführungsbeispiel vertikal ausgerichtet. Sie könnte jedoch auch schräg ausgerichtet sein, zum Beispiel einen Winkel von 15° mit der Horizontalen einschließen, wie bei dem Knick des asymmetrischen Abblendlichts.

Die Segmente 28-1 bis 28-6 sind bei dem vorliegenden Ausführungsbeispiel rechteckig, wobei sich die Segmente 28-1 bis 28-6 hinsichtlich ihrer Breite, das heißt, hinsichtlich ihres Horizontalwinkels, unterscheiden können. Es wird darauf hingewiesen, dass die Form der Segmente 28-1 bis 28-6 auch anders ausgebildet sein kann, zum Beispiel als Parallelogramm. Im vorliegenden Ausführungsbeispiel sind die Segmente 28-1 und 28-2 die schmalsten, das Segment 28-3 ist breiter, das Segmente 28-4 ist noch breiter und die äußeren beiden Segmente 28-5 und 28-6 sind noch breiter. Der Horizontalwinkel der Segmente 28-1 bis 28-6 nimmt somit nach außen hin, das heißt, von dem fahrerseitigen Segment 28-1 zum äußersten beifahrerseitigen Segment 28-6, zu. Des Weiteren unterscheiden sich die Beleuchtungsstärken innerhalb der Segmente 28-1 bis 28-6, wie es später bei der Erläuterung der Kurvenlichtfunktion beschrieben wird. Außerdem können mittels der weiteren fahrerseitigen Leuchtdiodeneinheiten 13 der Leuchtdiodenmatrix 9 weitere Segmente fahrerseitig neben dem Segment 28-1 beleuchtet werden, wie es später mit Bezug auf die Kurvenlichtfunktion erläutert wird.

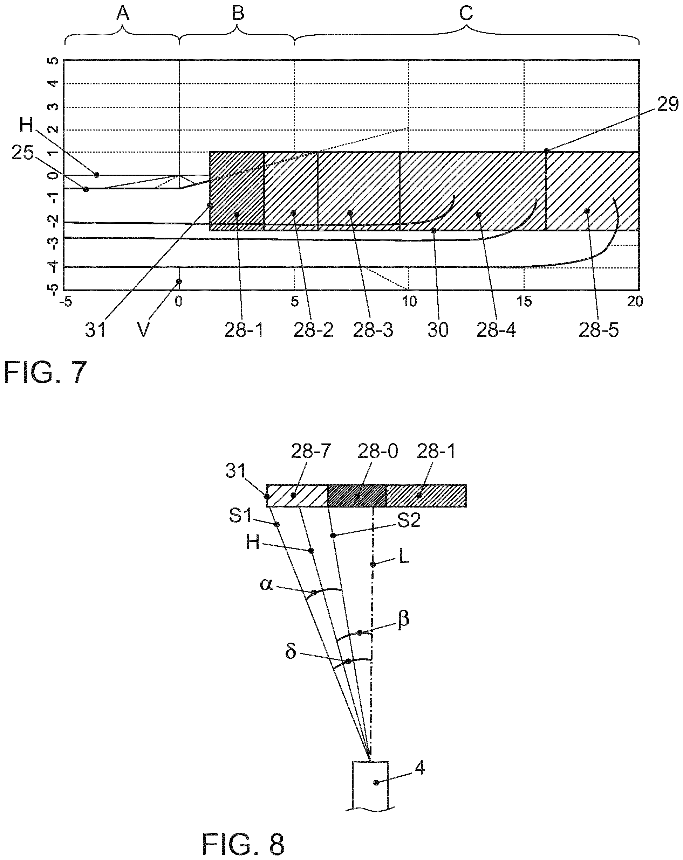

In Figur 6 ist die Gesamtlichtverteilung 32 gezeigt, die sich aus der Überlagerung der Lichtverteilung 24 des ersten Lichtmoduls und der Lichtverteilung 28 des zweiten Lichtmoduls 4 ergibt. In Figur 7 ist ein Detail dieser Gesamtlichtverteilung 32 gezeigt. Die seitliche Hell-Dunkel-Grenze 31 der Lichtverteilung 28 des zweiten Lichtmoduls 4 ist im Übergangsbereich B bei der ansteigenden Hell-Dunkel-Grenze 26 der Lichtverteilung 24 für das asymmetrische Abblendlicht angeordnet. Im vorliegenden Ausführungsbeispiel ist die vertikal ausgerichtete Hell-Dunkel-Grenze 31 bei einem Horizontalwinkel von etwa +1,5° bei etwa 1/3 der ansteigenden Hell-Dunkel-Grenze 26 angeordnet. Die obere Hell-Dunkel-Grenze 29 der Lichtverteilung 28 des zweiten Lichtmoduls 4 deckt sich im Wesentlichen mit der oberen Hell-Dunkel-Grenze 27 der Lichtverteilung 24 des ersten Lichtmoduls 3 im Bereich C auf der Beifahrerseite des Fahrzeugs 1. Die Lichtverteilung 28 ergänzt somit den asymmetrischen Zweig des asymmetrischen Abblendlichts auf der Beifahrerseite.

Die in den Figuren 6 und 7 gezeigte Gesamtlichtverteilung 32 ist eine Ausgangslichtverteilung, wie sie bei einer Geradeausfahrt des Fahrzeugs 1 mittels der Steuereinheit 16 erzeugt wird. Mit Bezug zu den Figuren 8 bis 10 wird im Folgenden ein Ausführungsbeispiel des erfindungsgemäßen Verfahrens zum Bereitstellen einer Kurvenlichtfunktion beschrieben. Das Verfahren wird mittels des vorstehend beschriebenen Ausführungsbeispiels des erfindungsgemäßen Scheinwerfersystems ausgeführt, wobei sich bei der Beschreibung des Verfahrens weitere Details des Ausführungsbeispiels des erfindungsgemäßen Systems ergeben.

Zunächst werden mit Bezug zu Figur 8 geometrische Details der Lichtemission durch das zweite Lichtmodul 4 erläutert. Durch den Brennpunkt des zweiten Lichtmoduls 4 verläuft eine zur Längsachse des Fahrzeugs 1 parallele Achse L. Von jeweils einer Leuchtdiodeneinheit 13 des zweiten Lichtmoduls 4 werden die beleuchteten Segmente 28-1, 28-0 und 28-7 erzeugt, wobei in diesem Fall von dem linken Segment 28-7 die seitliche, im vorliegenden Ausführungsbeispiel vertikale, Hell-Dunkel-Grenze 31 gebildet wird. Die Beleuchtungsstärke bei dem linken Segment 28-7 ist in dem Fall am höchsten, die Beleuchtungsstärke bei dem Segment 28-0 ist geringer und die Beleuchtungsstärke bei dem Segment 28-1 ist noch geringer. Im Segment 28-7 liegt somit die maximale Lichtintensität vor. Die äußersten Lichtstrahlen S1 und S2, welche das Segment 28-7 mit maximaler Lichtintensität bilden, schließen einen Horizontalwinkel α ein, die Winkelhalbierende ist der Strahl H, welcher wiederum mit der Längsachse L einen Winkel β einschließt. Der Winkel β gibt somit an, wo sich in horizontaler Richtung der Bereich mit maximaler Lichtintensität befindet, wohingegen der Winkel α angibt, wie breit in horizontaler Richtung dieser Bereich 28-7 mit maximaler Lichtintensität ist. Ferner schließt der Lichtstrahl, welcher die seitliche Hell-Dunkel-Grenze 21 bildet, mit der Längsachse L den Winkel δ ein. Im vorliegenden Ausführungsbeispiel handelt es sich in diesem Fall um den Strahl S1 auf der linken Seite des Segments 28-7 mit maximaler Lichtintensität.

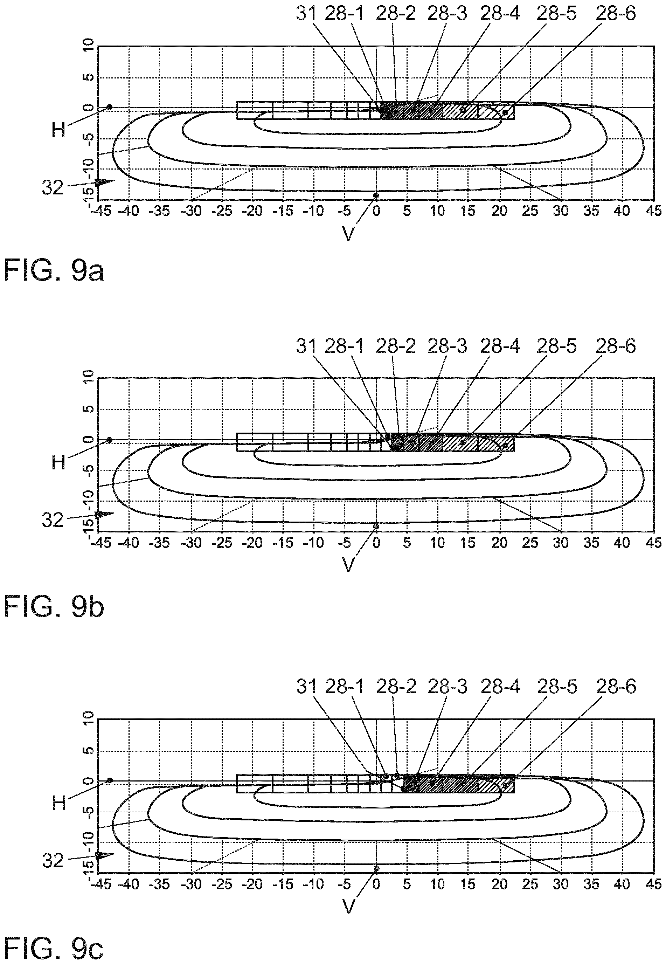

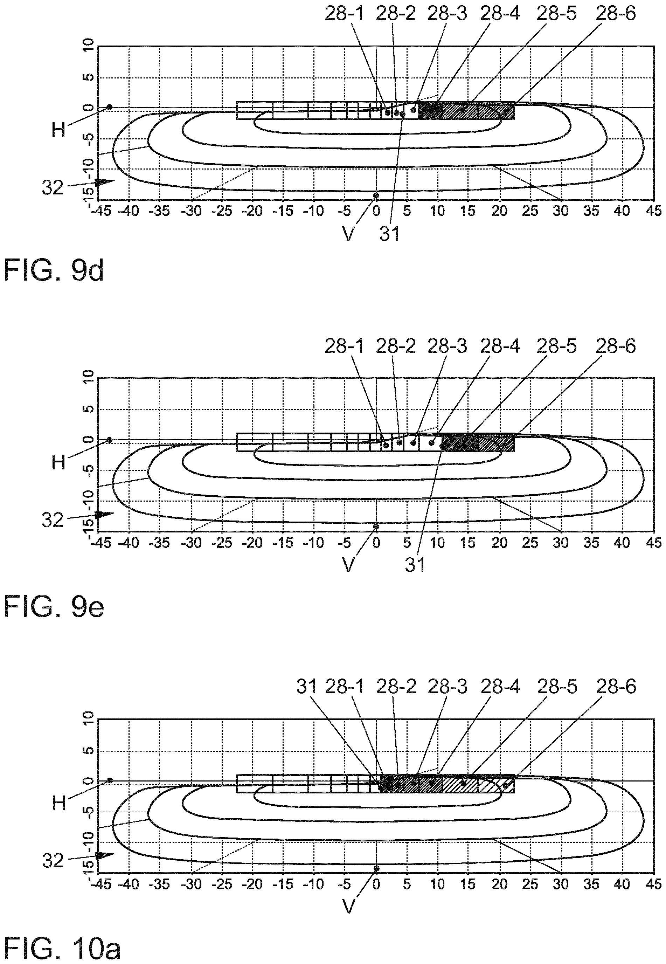

Mit Bezug zu den Figuren 9A bis 9E wird die Steuerung der Gesamtlichtverteilung 32 mittels der Steuereinheit 16 erläutert, wenn von der Kurvenerfassungseinheit 19 eine Rechtskurve detektiert wurde:

Die Kurvenerfassungseinheit 19 überträgt an die Steuereinheit 16 einen Kurvenradius sowie die Information, wo die Fahrbahn relativ zum Fahrzeug 1 diesen Kurvenradius besitzt, das heißt, ob es sich um den Radius der gerade durchfahrenen Kurve handelt oder einen Kurvenradius in einem vor dem Fahrzeug 1 liegenden Fahrbahnabschnitt. Die Steuereinheit 16 berechnet hieraus einen Kurvenlichtwinkel. Dies ist der Winkel δ, den der äußerste Lichtstrahl. der die seitliche Hell-Dunkel-Grenze 31 der Lichtverteilung 28 des zweiten Lichtmoduls 4 bildet, mit der Längsachse L einschließt. Dieser Kurvenlichtwinkel δ wird mittels der Steuereinheit 16 in Abhängigkeit vom Radius der von der Kurvenerfassungseinheit 19 erfassten Kurve bestimmt. Wie in den Figuren 9A bis 9E gezeigt, verschiebt sich die seitliche Hell-Dunkel-Grenze 31 der Lichtverteilung 28, welche der Lichtverteilung 24 des asymmetrischen Abblendlichts überlagert ist, bei einer Rechtskurve nach rechts, um die Fahrbahn in dieser Kurve besser auszuleuchten.

Das horizontale Verschwenken der seitlichen Hell-Dunkel-Grenze 31 erfolgt jedoch nicht mechanisch, sondern ausschließlich durch eine Veränderung der von den Leuchtdiodeneinheiten 13 emittierten Lichtintensitäten. Beim Verschwenken der seitlichen Hell-Dunkel-Grenze 31 von dem in Figur 9A gezeigten Ausgangszustand in den in Figur 9B gezeigten Zustand wird die Leuchtdiodeneinheit 13, welche das Segment 28-1 beleuchtet, ausgeschaltet und die Lichtintensitäten der Leuchtdiodeneinheiten 13, welche die Segmente 28-2 und 28-6 beleuchten, werden erhöht. Der Verlauf der Beleuchtungsstärken über die Segmente 28-2 und 28-6 bleibt dabei jedoch erhalten, sodass weiterhin von innen nach außen die Beleuchtungsstärke abfällt. Auf diese Weise wird die seitliche Hell-Dunkel-Grenze 31 bis zu dem Zustand verschwenkt, der in Figur 9E gezeigt ist. In diesem Fall sind die Leuchtdiodeneinheiten 13, welche die Segmente 28-1 bis 28-3 beleuchten, ausgeschaltet, die Leuchtdiodeneinheit 13, welche das Segment 28-5 beleuchtet, emittiert Licht mit maximaler Lichtintensität und die Leuchtdiodeneinheit 13, welche das Segment 28-6 beleuchtet, emittiert Licht mit geringerer Lichtintensität.

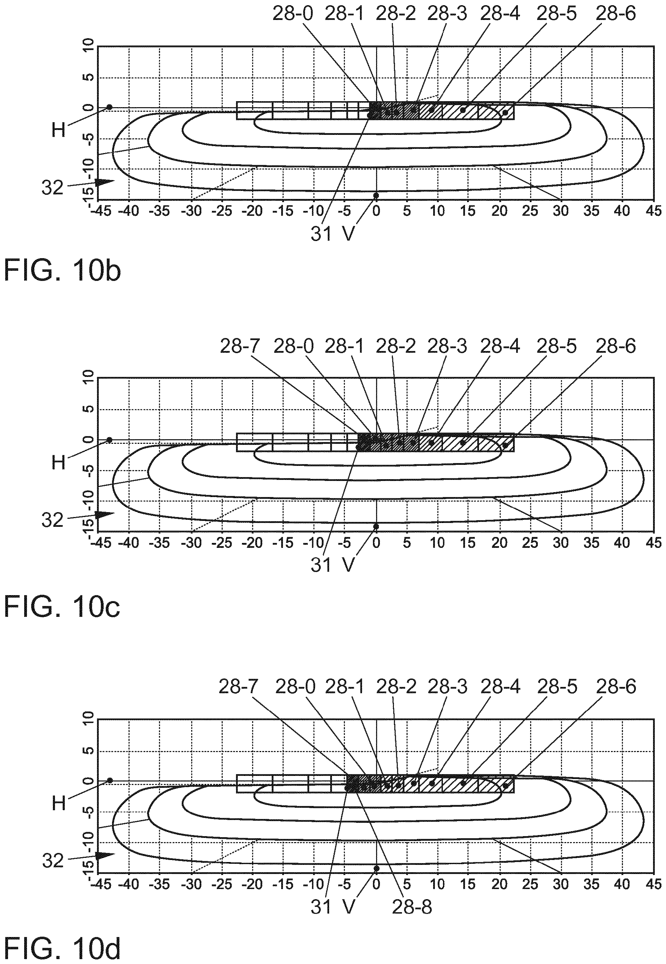

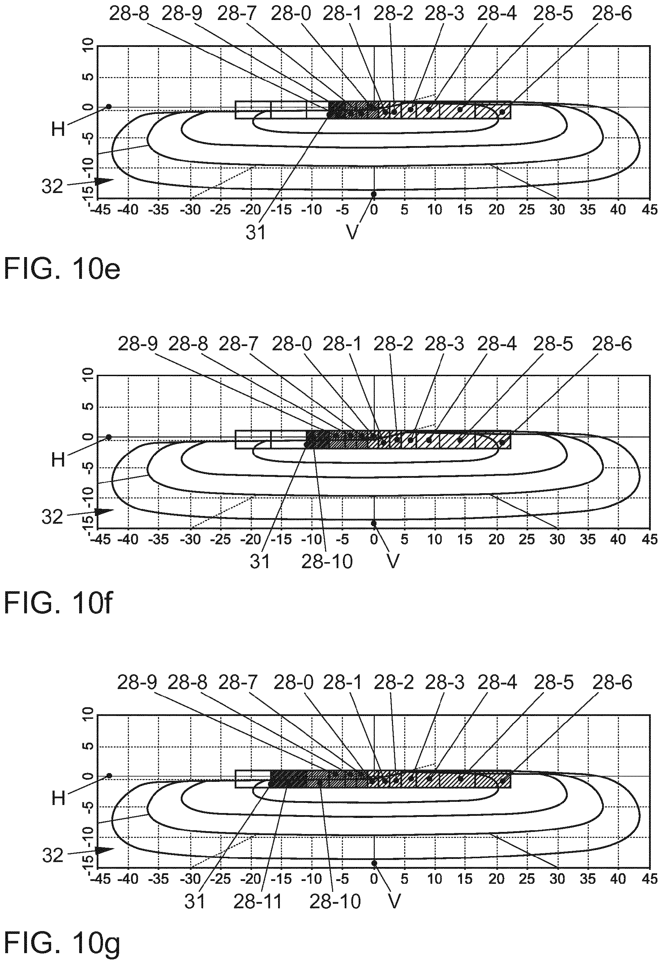

Mit Bezug zu den Figuren 10A bis 10G wird der Verlauf der Gesamtlichtverteilung 32 erläutert, welche für die Kurvenlichtfunktion bei einer Linkskurve erzeugt wird. In diesem Fall wird die seitliche Hell-Dunkel-Grenze 31 in Richtung der Fahrerseite geschwenkt, das heißt, bei Rechtsverkehr nach links. Auch in diesem Fall wird das Schwenken der seitlichen Hell-Dunkel-Grenze 31 nicht mechanisch umgesetzt, sondern dadurch, dass die von den Leuchtdiodeneinheiten 13 emittierten Lichtintensitäten verändert werden. Für das Schwenken der seitlichen Hell-Dunkel-Grenze 31 nach links werden sukzessive weitere Leuchtdiodeneinheiten 13 zugeschaltet, um die Segmente 28-0, 28-7, 28-8, 28-9, 28-10 und 28-11 zu beleuchten, wie es in den Figuren 10B bis 10G gezeigt ist. Gleichzeitig wird die von den anderen Leuchtdiodeneinheiten 13 emittierte Lichtintensität so verändert, dass sich jeweils hinsichtlich der Lichtverteilung 28, welche dem asymmetrischen Abblendlicht überlagert ist, ein Intensitätsverlauf ergibt, der im äußersten, zur Fahrerseite hin gerichteten Abschnitt eine höhere Beleuchtungsstärke aufweist als Segmente, die weiter auf der Seite des Beifahrers angeordnet sind. Bei einer Linkskurve wird die gesamte Breite des von der Lichtverteilung 28 ausgeleuchteten Abschnitts somit nach links in Richtung der Kurve verbreitert. Des Weiteren vergrößert sich der Horizontalwinkel α für die Breite des Segments mit maximaler Lichtintensität, je weiter der Absolutbetrag des Winkels δ steigt, das heißt, je größer der Kurvenlichtwinkel ist, um den die seitliche Hell-Dunkel-Grenze 31 in Richtung der Kurve geschwenkt wird. In Figur 10G ist zu erkennen, dass das am weitesten links beleuchtete Segment 28-11 die höchste Beleuchtungsstärke aufweist und die Beleuchtungsstärke der Segmente in Richtung des äußersten rechten Segments 28-6 abfällt. Bei den äußeren beifahrerseitigen Segments kann die Beleuchtungsstärke auch auf null abgesenkt werden.

Außerdem ist aus Figur 10G ersichtlich, dass der Horizontalwinkel der Segmente 28-0 bis 28-11 in den äußeren Bereichen am größten ist und zur Mitte hin in Richtung des zentralen Segments 28-0 abnimmt. Der Horizontalwinkel der Segmente 28-0 bis 28-11 ist von der Optik der Leuchtdiodeneinheiten 13 festgelegt und insbesondere nicht veränderlich. Der Verlauf der Beleuchtungsstärke über die Segmente 28-0 bis 28-11 ist hingegen mittels der Steuereinheit 16 einstellbar.

### Bezugszeichenliste

- 1: Fahrzeug
- 2: Scheinwerfersystem
- 3: erstes Lichtmodul
- 4: zweites Lichtmodul
- 5: Lichtquelle
- 6: Reflektor
- 7: Projektionslinse
- 8: Lichtabschlussscheibe
- 9: Leuchtdiodenmatrix
- 10: Optikelement
- 11: Lichtabschlussscheibe
- 12-1,12-2: Horizontalzeilen
- 13: Leuchtdiodeneinheiten
- 14: Leuchtdiodeneinheiten
- 15: Leuchtdiode
- 16: Steuereinheit
- 17: Datenbus
- 18: Navigationssystem
- 19: Kurvenerfassungseinheit
- 20: Sensor für Querbeschleunigung
- 21: Sensor für Lenkwinkel
- 22: Geschwindigkeitssensor
- 23: Kamera
- 24: Lichtverteilung
- 25: Hell-Dunkel-Grenze
- 26: Hell-Dunkel-Grenze
- 27: Hell-Dunkel-Grenze
- 28, 28-1 bis 28-11: Segmente
- 29: Hell-Dunkel-Grenze
- 30: Hell-Dunkel-Grenze
- 31: seitliche Hell-Dunkel-Grenze
- 32: Gesamtlichtverteilung

## Patentansprüche

1. Scheinwerfersystem (2) für ein Fahrzeug (1) zum Bereitstellen einer Kurvenlichtfunktion umfassend:
ein erstes Lichtmodul (3), das eine erste Lichtquelle (5) und eine Optikeinheit (6, 7) aufweist und das ausgebildet ist, ein asymmetrisches Abblendlicht zu erzeugen, wobei das asymmetrische Abblendlicht auf einer Fahrerseite (A) einer Mittelachse (V) eine obere erste Hell-Dunkel-Grenze (25) besitzt, die horizontal ausgerichtet ist,
ein zweites Lichtmodul (4), das mehrere matrixartig angeordnete Leuchtdiodeneinheiten (13, 14) umfasst,
eine Steuereinheit (16), die mit zumindest dem zweiten Lichtmodul (4) gekoppelt ist und die ausgebildet ist, die Lichtemission der einzelnen Leuchtdiodeneinheiten (13, 14) des zweiten Lichtmoduls (4) separat anzusteuern, und
eine Kurvenerfassungseinheit (19), die mit der Steuereinheit (16) gekoppelt ist und mit welcher der Radius einer Kurve in Fahrtrichtung des Fahrzeugs (1) erfassbar ist, wobei
die matrixartig angeordneten Leuchtdiodeneinheiten (13, 14) des zweiten Lichtmoduls (4) genau zwei Horizontalzeilen (12-1, 12-2), nämlich eine erste Horizontalzeile (12-1) und eine zweite Horizontalzeile (12-2), aufweisen und
mittels der Lichtemission der ersten Horizontalzeile (12-1) der Leuchtdiodeneinheiten (13) eine Abstrahlcharakteristik erzeugbar ist mit einer unteren zweiten Hell-Dunkel-Grenze (30), welche unterhalb der ersten Hell-Dunkel-Grenze (25) des Abblendlichts liegt, einer oberen dritten Hell-Dunkel-Grenze (29), welche oberhalb der ersten Hell-Dunkel-Grenze (25) des Abblendlichts liegt, und einer seitlichen vierten Hell-Dunkel-Grenze (31) auf der der Fahrerseite zugewandten Seite der Lichtemission (28) des zweiten Lichtmoduls (4) und
zum Bereitstellen einer Kurvenlichtfunktion die Steuereinheit (16), die Kurvenerfassungseinheit (19) und das zweite Lichtmodul (4) so ausgebildet sind, dass ein Kurvenlichtwinkel (δ), den der äußerste (S1) der Lichtstrahlen der Lichtemission (28) der ersten Horizontalzeile (12-1) der Leuchtdiodeneinheiten (13), welcher die seitliche vierte Hell-Dunkel-Grenze (31) erzeugt, mit der Fahrzeuglängsachse (L) in horizontaler Richtung einschließt, veränderbar ist und dass dieser Kurvenlichtwinkel (δ) vom Radius der von der Kurvenerfassungseinheit erfassten Kurve abhängt,
**dadurch gekennzeichnet, dass**
mittels genau einer Horizontalzeile (12-1), nämlich der ersten Horizontalzeile (12-1), der matrixartig angeordneten Leuchtdiodeneinheiten (13) des zweiten Lichtmoduls (4) die Kurvenlichtfunktion bereitstellbar ist und
mittels der zweiten Horizontalzeile (12-2) der matrixartig angeordneten Leuchtdiodeneinheiten (14) eine Fernlichtfunktion bereitstellbar ist.

2. Verfahren zum Bereitstellen einer Kurvenlichtfunktion, bei dem
ein erstes Lichtmodul (3) ein asymmetrisches Abblendlicht erzeugt, das auf der Fahrerseite (A) einer Mittelachse (V) eine obere erste Hell-Dunkel-Grenze (25) besitzt, die horizontal ausgerichtet ist,
der Radius einer Kurve in Fahrrichtung des Fahrzeugs (1) erfasst wird,
ein zweites Lichtmodul (4), das mehrere Leuchtdiodeneinheiten (13, 14) umfasst, die matrixartig mit genau zwei Horizontalzeilen (12-1, 12-2), nämlich einer ersten Horizontalzeile (12-1) und einer zweiten Horizontalzeile (12-2), angeordnet sind, so angesteuert wird, dass die Lichtemission der ersten Horizontalzeile (12-1) der Leuchtdiodeneinheiten (13) eine Abstrahlcharakteristik erzeugt mit einer unteren zweiten Hell-Dunkel-Grenze (30), welche unterhalb der ersten Hell-Dunkel-Grenze (25) des Abblendlichts liegt, einer oberen dritten Hell-Dunkel-Grenze (29), welche oberhalb der ersten Hell-Dunkel-Grenze (25) des Abblendlichts liegt, und einer seitlichen vierten Hell-Dunkel-Grenze (31) auf der der Fahrerseite zugewandten Seite der Lichtemission (28) des zweiten Lichtmoduls (4) und
zum Bereitstellen der Kurvenlichtfunktion ein Kurvenlichtwinkel (δ), den der äußerste (S1) der Lichtstrahlen der Lichtemission (28) der ersten Horizontalzeile (12-1) der Leuchtdiodeneinheiten (13), welche die seitliche vierte Hell-Dunkel-Grenze (31) erzeugen, mit der Fahrzeuglängsachse (L) in horizontaler Richtung einschließt, verändert wird, wobei der Kurvenlichtwinkel (δ) vom Radius der erfassten Kurve abhängt, **dadurch gekennzeichnet, dass**
mittels genau einer Horizontalzeile (12-1), nämlich der ersten Horizontalzeile (12-1), der matrixartig angeordneten Leuchtdiodeneinheiten (13) des zweiten Lichtmoduls (4) die Kurvenlichtfunktion bereitgestellt wird und
mittels der zweiten Horizontalzeile (12-2) der matrixartig angeordneten Leuchtdiodeneinheiten (14) eine Fernlichtfunktion bereitgestellt wird.

3. Verfahren nach Anspruch 2, **dadurch gekennzeichnet, dass** die Leuchtdiodeneinheiten (13) des zweiten Lichtmoduls (4) so angesteuert werden, dass in horizontaler Richtung Segmente (28-0 bis 28-11) mit unterschiedlicher Lichtintensität gebildet werden und der Horizontalwinkel der Segmente (28-0 bis 28-11) von der der Fahrerseite zugewandten Seite zu der gegenüberliegenden Seite nach außen hin zunimmt.

4. Verfahren nach Anspruch 2, **dadurch gekennzeichnet, dass** die Leuchtdiodeneinheiten (13) des zweiten Lichtmoduls (4) so angesteuert werden, dass in horizontaler Richtung Segmente (28-0 bis 28-11) mit unterschiedlicher Lichtintensität gebildet werden und der Horizontalwinkel der Segmente (28-0 bis 28-11) von innen zu den Außenseiten hin zunimmt.

5. Verfahren nach einem der Ansprüche 2 bis 4, **dadurch gekennzeichnet, dass** die Leuchtdiodeneinheiten (13) des zweiten Lichtmoduls (4) so angesteuert werden, dass in horizontaler Richtung Segmente (28-0 bis 28-11) mit unterschiedlicher Lichtintensität gebildet werden und die Lichtintensität der Segmente (28) von der der Fahrerseite zugewandten Seite zu der gegenüberliegenden Seite nach außen hin abnimmt.

6. Verfahren nach einem der Ansprüche 2 bis 5, **dadurch gekennzeichnet, dass** in Abhängigkeit von dem Radius der erfassten Kurve die Leuchtdiodeneinheiten (13) des zweiten Lichtmoduls (4) so angesteuert werden, dass sich in Horizontalrichtung ein Lichtintensitätsverlauf ergibt, bei dem in einem Horizontalwinkelbereich (28-7) die Lichtintensität maximal ist und in benachbarten Horizontalwinkelbereichen (28-0, 28-1) die Lichtintensität geringer ist, und dass der Horizontalwinkel (α) des Horizontalwinkelbereichs (28-7) mit maximaler Lichtintensität vergrößert wird, wenn sich der Kurvenlichtwinkel (δ) vergrößert.

7. Verfahren nach Anspruch 6, **dadurch gekennzeichnet, dass** die Leuchtdiodeneinheiten (13) des zweiten Lichtmoduls (4) so angesteuert werden, dass die seitliche vierte Hell-Dunkel-Grenze (31) von dem Horizontalwinkelbereich (28-1) mit maximaler Lichtintensität gebildet wird.

8. Verfahren nach einem der Ansprüche 2 bis 7, **dadurch gekennzeichnet, dass** die seitliche vierte Hell-Dunkel-Grenze (31) im Bereich des Anstiegs der Hell-Dunkel-Grenze (26) des asymmetrischen Abblendlichts auf der Beifahrerseite liegt, wenn erfasst wurde, dass keine Kurve durchfahren wird.

## Claims

1. A headlight system (2) for a vehicle (1) for making available a cornering light function, comprising:
a first light module (3), which comprises a first light source (5) and an optic unit (6, 7) and is designed to generate an asymmetric low beam light, wherein the asymmetric low beam light on a driver's side (A) of a central axis (V) has an upper first light-dark boundary (25) that is oriented horizontally;
a second light module (4), which comprises a plurality of light emitting diode units (13, 14) arranged like a matrix;
a control unit (16), which is coupled to at least the second light module (4) and designed to separately control the light emission of the individual light emitting diode units (13, 14) of the second light module (4); and
a cornering detection unit (19), which is coupled to the control unit (16) and by which the radius of a curve in the direction of travel of the vehicle (1) can be detected,
the light emitting diode units (13, 14) of the second light module (4), which are arranged like a matrix, having precisely two horizontal rows (12-1, 12-2), namely a first horizontal row (12-1) and a second horizontal row (12-2), and
by means of the light emission of the first horizontal row (12-1) of the light emitting diode units (13), an emission characteristic cam be generated, having a lower second light-dark boundary (30) which is situated below the first light-dark boundary (25) of the low beam light, an upper third light-dark boundary (29) which is situated above the first light-dark boundary (25) of the low beam light, and a lateral fourth light-dark boundary (31) on the side of the light emission (28) of the second light module (4) which faces the driver's side, and
in order to make a cornering light function available, the control unit (16), the cornering detection unit (19), and the second light module (4) are designed in such a way that a cornering light angle (δ) formed by the outermost (S1) of the light beams of the light emission (28) of the first horizontal row (12-1) of the light emitting diode units (13), which generates the lateral fourth light-dark boundary (31), with the longitudinal vehicle axis (L) of the vehicle in the horizontal direction, is variable, and that this cornering light angle (δ) depends on the radius of the curve detected by the cornering detection unit,
**characterized in that**
the cornering light function can be made available by means of precisely one horizontal row (12-1), namely the first horizontal row (12-1) of the light emitting diode units (13) of the second light module (4) which are arranged like a matrix, and
a high beam function can be made available by means of the second horizontal row (12-2) of the light emitting diode units (14) arranged like a matrix.

2. A method for making a cornering light function available, in which
a first light module (3) generates an asymmetric low beam light that, on the driver's side (A) of a central axis (V), has an upper first light-dark boundary (25) that is oriented horizontally;
the radius of a curve in the direction of travel of the vehicle (1) is detected;
a second light module (4), comprising a plurality of light emitting diode units (13 14) arranged like a matrix with precisely two horizontal rows (12-1, 12-2), namely a first horizontal row (12-1) and a second horizontal row (12-2), is controlled in such a way that the light emission of the first horizontal row (12-1) of the light emitting diode units (13) generates an emission characteristic having a lower second light-dark boundary (30), which is situated below the first light-dark boundary (25) of the low beam light, an upper third light-dark boundary (29) which is situated above the first light-dark boundary (25) of the low beam light, and a lateral fourth light-dark boundary (31) on the side of the light emission (28) of the second light module (4) which faces the driver's side; and
in order to make a cornering light function available, a cornering light angle (δ) is varied which, with the longitudinal axis (L) of the vehicle in the horizontal direction, encloses the outermost (S1) of the light rays of the light emission (28) of the first horizontal row (12-1) of the light emitting diode units (13) which generate the lateral fourth light-dark boundary (31), wherein the cornering light angle (5) depends on the radius of the detected curve,
**characterized in that**
the cornering light function is made available by means of precisely one horizontal row (12-1), namely the first horizontal row (12-1) of the light emitting diode units (13) of the second light module (4) which are arranged like a matrix, and
a high beam function is made available by means of the second horizontal row (12-2) of the light emitting diode units (14) arranged like a matrix.

3. The method according to claim 2, **characterized in that** the light emitting diode units (13) of the second light module (4) are controlled in such a way that segments (28-0 to 28-11) having differing light intensities are formed in the horizontal direction, and the horizontal angle of the segments (28-0 to 28-11) increases outwardly from the side facing the driver's side toward the opposite side.

4. The method according to claim 2, **characterized in that** the light emitting diode units (13) of the second light module (4) are controlled in such a way that segments (28-0 to 28-11) having differing light intensities are formed in the horizontal direction, and the horizontal angle of the segments (28-0 to 28-11) increases from the inside to the outside.

5. A method according to one of claims 2 to 4, **characterized in that** the light emitting diode units (13) of the second light module (4) are controlled in such a way that segments (28-0 to 28-11) having differing light intensities are formed in the horizontal direction, and the light intensity of the segments (28) decreases outwardly from the side facing the driver's side toward the opposite side.

6. A method according to one of claims 2 to 5, **characterized in that,** depending on the radius of the detected curve, the light emitting diode units (13) of the second light module (4) are controlled in such a way that a light intensity progression results in the horizontal direction, in which the light intensity is maximal in a horizontal angle range (28-7) and is lower in adjacent horizontal angle ranges (28-0, 28-1); and **in that** the horizontal angle (α) of the horizontal angle range (28-7) having maximal light intensity is increased when the cornering light angle (5) increases.

7. The method according to claim 6, **characterized in that** the light emitting diode units (13) of the second light module (4) are controlled in such a way that the lateral fourth light-dark boundary (31) is formed by the horizontal angle range (28-1) having maximal light intensity.

8. A method according to one of claims 2 to 7, **characterized in that** the lateral fourth light-dark boundary (31) is situated in the region of the rise of the light-dark boundary (26) of the asymmetric low beam light on the passenger side if it has been detected that no curve is being traversed.

## Revendications

1. Système de phare (2) pour un véhicule (1) permettant la fourniture d'une fonction d'éclairage de virage, comprenant :
un premier module d'éclairage (3), qui comprend une première source de lumière (5) et une unité optique (6, 7) et est conçu pour produire un faisceau de croisement asymétrique, le faisceau de croisement asymétrique possédant, côté conducteur (A) d'un axe central (V), une première limite obscurité-clarté (25) qui est orientée horizontalement,
un deuxième module d'éclairage (4), qui comprend plusieurs unités de diodes électroluminescentes (13, 14) agencées en matrice,
une unité de commande (16), qui est accouplée avec au moins le deuxième module d'éclairage (4) et qui est conçue pour commander séparément l'émission de lumière des unités de diodes électroluminescentes (13, 14) individuelles du deuxième module d'éclairage (4) et
une unité de détection de virage (19), qui est accouplée à l'unité de commande (16) et au moyen de laquelle le rayon d'un virage dans le sens de marche du véhicule (1) peut être détecté, dans lequel
les unités de diodes électroluminescentes (13, 14) agencées en matrice du deuxième module d'éclairage (4) présentent exactement deux lignes horizontales (12-1, 12-2), à savoir une première ligne horizontale (12-1) et une deuxième ligne horizontale (12-2) et
une caractéristique de rayonnement peut être produite au moyen de l'émission de lumière de la première ligne horizontale (12-1) des unités de diodes électroluminescentes (13) avec une deuxième limite obscurité-clarté inférieure (30), qui se situe en-deçà de la première limite obscurité-clarté (25) du faisceau de croisement, une troisième limite obscurité-clarté supérieure (29), qui se situe au-dessus de la première limite obscurité-clarté (25) du faisceau de croisement et une quatrième limite obscurité-clarté latérale (31) sur le côté, tourné vers le côté conducteur, de l'émission de lumière (28) du deuxième module d'éclairage (4) et
pour fournir une fonction d'éclairage de virage, l'unité de commande (16), l'unité de détection de virage (19) et le deuxième module d'éclairage (4) sont conçus de sorte qu'un angle d'éclairage de virage (δ), que le faisceau lumineux le plus à l'extérieur (S1) de l'émission de lumière (28) de la première ligne horizontale (12-1) des unités de diodes électroluminescentes (13), lequel produit la quatrième limite obscurité-clarté latérale (31), forme avec l'axe longitudinal (L) du véhicule dans la direction horizontale, soit variable et que cet angle d'éclairage de virage (δ) dépende du rayon du virage détecté par l'unité de détection de virage,
**caractérisé en ce que**
la fonction d'éclairage de virage peut être fournie au moyen exactement d'une ligne horizontale (12-1), à savoir la première ligne horizontale (12-1), des unités de diodes électroluminescentes (13) agencées en matrice du deuxième module d'éclairage (4) et
une fonction de faisceau de route peut être fournie au moyen de la deuxième ligne horizontale (12-2) des unités de diodes
électroluminescentes (14) agencées en matrice.

2. Procédé de fourniture d'une fonction d'éclairage de virage, dans lequel
un premier module d'éclairage (3) produit un faisceau de croisement asymétrique, qui possède, côté conducteur (A) d'un axe central (V), une première limite obscurité-clarté (25), qui est orientée horizontalement,
le rayon d'un virage dans le sens de marche du véhicule (1) est détecté,
un deuxième module d'éclairage (4), qui comporte plusieurs unités de diodes électroluminescentes (13, 14), qui sont agencées en matrice avec exactement deux lignes horizontales (12-1, 12-2), à savoir une première ligne horizontale (12-1) et une deuxième ligne horizontale (12-2), est commandé de sorte que l'émission de lumière de la première ligne horizontale (12-1) des unités de diodes électroluminescentes (13) produise une caractéristique de rayonnement avec une deuxième limite obscurité-clarté inférieure (30), qui se situe en-deçà de la première limite obscurité-clarté (25) du faisceau de croisement, une troisième limite obscurité-clarté supérieure (29), qui se situe au-dessus de la première limite obscurité-clarté (25) du faisceau de croisement et une quatrième limite obscurité-clarté latérale (31) sur le côté, tourné vers le côté conducteur, de l'émission de lumière (28) du deuxième module d'éclairage (4) et
pour fournir la fonction d'éclairage de virage, un angle d'éclairage de virage (δ), que le faisceau lumineux le plus à l'extérieur (S1) de l'émission de lumière (28) de la première ligne horizontale (12-1) des unités de diodes électroluminescentes (13), lesquelles produisent la quatrième limite obscurité-clarté latérale (31), forme avec l'axe longitudinal (L) du véhicule dans la direction horizontale, est modifié, dans lequel l'angle d'éclairage de virage (δ) dépend du rayon du virage détecté,
**caractérisé en ce que**
la fonction d'éclairage de virage est fournie au moyen exactement d'une ligne horizontale (12-1), à savoir la première ligne horizontale (12-1), des unités de diodes électroluminescentes (13) agencées en matrice du deuxième module d'éclairage (4) et
une fonction de faisceau de route est fournie au moyen de la deuxième ligne horizontale (12-2) des unités de diodes électroluminescentes (14) agencées en matrice.

3. Procédé selon la revendication 2, **caractérisé en ce que** les unités de diodes électroluminescentes (13) du deuxième module d'éclairage (4) sont commandées de telle sorte que, dans la direction horizontale, des segments (28-0 à 28-11) sont formés avec une intensité d'éclairage différente et l'angle horizontal des segments (28-0 à 28-11), du côté tourné vers le côté conducteur au côté opposé, augmente vers l'extérieur.

4. Procédé selon la revendication 2, **caractérisé en ce que** les unités de diodes électroluminescentes (13) du deuxième module d'éclairage (4) sont commandées de telle sorte que, dans la direction horizontale, des segments (28-0 à 28-11) sont formés avec une intensité d'éclairage différente et l'angle horizontal des segments (28-0 à 28-11), augmente de l'intérieur vers le côté extérieur.

5. Procédé selon une quelconque des revendications 2 à 4, **caractérisé en ce que** les unités de diodes électroluminescentes (13) du deuxième module d'éclairage (4) sont commandées de telle sorte que, dans la direction horizontale, des segments (28-0 à 28-11) sont formés avec une intensité d'éclairage différente et l'intensité d'éclairage des segments (28), du côté tourné vers le côté conducteur au côté opposé, diminue vers l'extérieur.

6. Procédé selon une quelconque des revendications 2 à 5, **caractérisé en ce que,** en fonction du rayon du virage détecté, les unités de diodes électroluminescentes (13) du deuxième module d'éclairage (4) sont commandées de telle sorte que, dans la direction horizontale, un tracé d'intensité d'éclairage se forme, selon lequel, dans une plage d'angle horizontal (28-7), l'intensité d'éclairage est maximale et, dans des plages d'angle horizontal (28-0, 28-1) adjacentes, l'intensité d'éclairage est inférieure et **en ce que** l'angle horizontal (α) de la plage d'angle horizontal (28-7) augmente avec l'intensité d'éclairage maximale lorsque l'angle d'éclairage dans le virage (δ) augmente.

7. Procédé selon la revendication 6, **caractérisé en ce que** les unités de diodes électroluminescentes (13) du deuxième module d'éclairage (4) sont commandées de telle sorte que la quatrième limite obscurité-clarté latérale (31) est formée par la plage d'angle horizontal (28-1) ayant l'intensité d'éclairage maximale.

8. Procédé selon une quelconque des revendications 2 à 7, **caractérisé en ce que** la quatrième limite obscurité-clarté latérale (31) se trouve dans la zone de l'augmentation de la limite obscurité-clarté (26) du faisceau de croisement asymétrique sur le côté passager, lorsque l'absence de virage est détectée.
